# EUROPÄISCHE PATENTSCHRIFT

(11) **EP 3 356 894 B1**
(45) Veröffentlichungstag und Bekanntmachung des Hinweises auf die Patenterteilung: **12.05.2021**
(21) Anmeldenummer: 16751240.9
(22) Anmeldetag: 02.08.2016
(51) Int. Cl.: G05B 19/042

(54) **VERFAHREN ZUR AUTOMATISCHEN KONFIGURATION EINES EXTERNEN STEUERUNGSSYSTEMS ZUR STEUERUNG UND/ODER REGELUNG EINES ROBOTERSYSTEMS**
METHOD FOR THE AUTOMATIC CONFIGURATION OF AN EXTERNAL CONTROL SYSTEM FOR THE OPEN-LOOP AND/OR CLOSED-LOOP CONTROL OF A ROBOT SYSTEM
PROCÉDÉ DE CONFIGURATION AUTOMATIQUE D'UN SYSTÈME DE COMMANDE EXTERNE POUR LA COMMANDE ET/OU LA RÉGULATION D'UN SYSTÈME ROBOTIQUE

(30) Priorität: 29.09.2015 DE 102015218699; 29.09.2015 DE 102015218697
(43) Veröffentlichungstag der Anmeldung: 08.08.2018
(73) Patentinhaber: Bayerische Motoren Werke Aktiengesellschaft, 80809 München (DE)
(72) Erfinder: TASCHEW, Maxim, 90559 Burgthann (DE)
(86) Internationale Anmeldenummer: PCT/EP2016/068422
(87) Internationale Veröffentlichungsnummer: WO 2017/054964

(56) Entgegenhaltungen:
- DE-A1-102006 017 945
- DE-T5-112008 003 963

## Beschreibung

Es wird ein Verfahren zur automatischen Konfiguration eines externen Steuerungssystems zur Steuerung und/oder zur Regelung eines Robotersystems angegeben. Das Robotersystem weist zumindest einen Manipulator und eine Robotersteuerung auf.

Die Druckschrift DE 11 2008 003963 T5 beschreibt ein System und ein Verfahren zur Off-line- bzw. leitungs- oder rechnerunabhängigen Programmierung eines Industrieroboters, der eine Robotersteuereinrichtung zum Steuern der Bewegungen des Roboters enthält. Insbesondere befasst sich die Druckschrift mit dem Bereich des Übertragens von Daten, die für die Konfiguration und die Programmierung eines Industrieroboters erforderlich sind, zu und von einem externen Computer, der ein Programmierungs- und Simulations-Werkzeug mit der Fähigkeit des Betreibens von einer oder mehreren virtuellen Robotersteuerungen aufweist.

In der Druckschrift DE 10 2006 017945 A1 ist ein Verfahren zur Optimierung einer Roboterleistung beschrieben, bei dem ein Computer, der mit der Robotersteuerung verbunden ist, eingerichtet ist, um Leistungsdaten des Roboters zu empfangen, während die Steuerung ein Pfadprogramm ausführt. Der Computer verwendet die Leistungsdaten, benutzerspezifizierte Optimierungsvorgaben und -bedingungen und einen Simulator, um eine neue Gruppe von Steuerungssystemparametern zu erzeugen, um die voreingestellte Gruppe in der Steuerung zu ersetzen. Der Computer wiederholt den Prozess, bis die neue Gruppe von Steuerungssystemparametern optimiert ist. Robotersysteme bestehen üblicherweise aus einem Manipulator (Roboterarm) und einer Robotersteuerung, die für die Programmierung, Steuerung und Regelung des Manipulators zuständig ist. Zentrale Bestandteile dieser Steuerung sind z.B. Applikationsprogramm, Interpreter, mathematische Funktionen zur Bahnplanung und Interpolation sowie Frequenzumrichter zur Ansteuerung der Elektromotoren des Manipulators. Des Weiteren enthält die Steuerung normalerweise Kommunikationsmechanismen, um mit unter- (z.B. Schweißzangensteuerung) und übergeordneter Peripherie (z.B. SPS-Zellensteuerung) zu kommunizieren.

Robotersteuerung und Manipulator werden heutzutage als Komplettlösung erworben und stellen stark proprietäre Systeme dar. Beispielsweise sind Programmierung und Konfiguration weitestgehend herstellerspezifisch. Insbesondere in der Applikationsentwicklung sind daher funktionale Einschränkungen und reduzierte herstellerübergreifende Austauschbarkeit die Folge.

Es gibt bereits Bestrebungen, Funktionen der herstellerspezifischen Robotersteuerung in externe Steuerungssysteme zu legen. Die bisher bekannten Lösungen stellen jedoch lediglich Insellösungen der einzelnen Roboterhersteller dar. So variieren die verfügbaren Konzepte je nach Roboterhersteller.

Beispielsweise sind Systeme bekannt, um Teach- und Verfahrbefehle des Roboters über eine SPS (speicherprogrammierbare Steuerung) vorzunehmen. Dadurch kann sowohl die Bewegungsprogrammierung als auch die Ablaufsteuerung des Roboterprogramms in der SPS erfolgen. Sämtliche darunter liegende Funktionen, wie Bahnplanung und Peripherieansteuerung, werden weiterhin in der Robotersteuerung durchgeführt.

Andere externe Steuerungssysteme bieten die Möglichkeit, die Bahnplanung des Roboters zum Teil bzw. vollständig zu deaktivieren, d.h. Achs- oder Werkzeugpositionen (TCP, "Tool Center Point") des Roboters können durch das externe Steuerungssystem vorgegeben bzw. beeinflusst werden. Die Schnittstellen variieren jedoch in den Konzepten und der Implementierung.

Des Weiteren ist es möglich auf die Steuerung des Roboterherstellers zu verzichten und lediglich den Manipulator einzusetzen. Die Steuerung wird in diesem Fall von einem Drittlieferant bezogen. Diese umfasst neben der notwendigen Software die Antriebssteuerung (Frequenzumrichter), um die Motoren des Roboterarms zu steuern. Eingesetzt werden diese Systeme insbesondere für Spezialapplikationen oder in Systemlösungen. Die Unterstützung durch Roboterhersteller variiert jedoch stark, da wettbewerbsrelevante Daten zur Verfügung gestellt werden müssen und der Roboterhersteller lediglich als Mechaniklieferant dient.

Die Inbetriebnahme eines Robotersystems mit externer Steuerung ist heutzutage ein zeitaufwändiger und manueller Prozess, der tiefes steuerungstechnisches und Robotik-Know-How erfordert. Zum einen muss die korrekte Schnittstellenbelegung der Schnittstelle der Robotersteuerung im externen Steuerungssystem implementiert werden. Dies variiert je nach Roboterhersteller und umfasst die korrekte Zuweisung von Ein- und Ausgängen oder die korrekte Aufbereitung und Interpretation von Nachrichtentelegrammen. Notwendig ist dies, um die korrekten Steuerungsbefehle an die Robotersteuerung zu senden und den aktuellen Systemzustand des Robotersystems zu erfassen und zu verarbeiten. Auf Ebene der Antriebe sind Informationen zur Ansteuerung des Motors notwendig: z.B. Spannung, Frequenz.

Zum anderen muss in der externen Steuerung ein Robotermodell des Manipulators erstellt werden, um Positionsvorgaben korrekt durchzuführen. Je nach tiefe der Integration muss das Robotermodell zudem weitere Eigenschaften (wie Massen, Massenträgheit) beinhalten um eine dynamisch ideale Steuerung des Manipulators zu gewährleisten.

Insbesondere der aufwändige Implementierungsprozess auf Grund des erforderlichen Roboter Know-Hows und die unklare Schnittstellendefinition bzw. Schnittstellenvielfalt sind hinderlich, um externe Steuerungssysteme flexibel einsetzen zu können. Zudem variiert die Unterstützung einer externen Steuerungsanbindung von Robotersystemen stark nach Roboterlieferant.

Zusammenfassend lassen sich die Nachteile der im Stand der Technik bekannten Lösungen und die damit verbundenen Herausforderungen wie folgt darstellen:
- Hohe Diversität an Komponenten, Vielzahl an Schnittstellen, kein einheitlicher Standard,
- manuelle und aufwendige Konfiguration der Grundsteuerung (BUS-Konfiguration und Antriebsfreigabe), der externen Schnittstellen und des Robotermodells in der externen Steuerung,
- Beschaffung der jeweiligen Daten zur Robotermechanik vom Lieferanten, und
- Geheimhaltung von Dynamik- und Antriebsdaten durch den Roboterhersteller - mit steigender Anzahl und Varianz an Manipulatoren bzw. Peripheriekomponenten multipliziert sich der Aufwand.

Es ist somit eine Aufgabe zumindest einiger Ausführungsformen ein Verfahren zur automatischen Konfiguration eines externen Steuerungssystems anzugeben, durch welches ein zeitaufwändiger und manueller Prozess zur Konfiguration und Ansteuerung eines Roboters entfallen kann.

Diese Aufgabe wird durch ein Verfahren gemäß dem unabhängigen Patentanspruch gelöst. Vorteilhafte Ausführungsformen und Weiterbildungen gehen weiterhin aus den abhängigen Patentansprüchen, der nachfolgenden Beschreibung und aus den Zeichnungen hervor.

Bei einem hier beschriebenen Verfahren zur automatischen Konfiguration eines externen Steuerungssystems zur Steuerung und/oder Regelung eines Robotersystems werden ein externes Steuerungssystem und ein Robotersystem bereitgestellt. Das Robotersystem weist vorzugsweise zumindest einen Manipulator und eine Robotersteuerung auf. Der Manipulator weist vorzugsweise zumindest einen Roboterarm auf. Beispielsweise kann es sich um einen mehrachsigen Roboterarm handeln. Die Robotersteuerung kann insbesondere zur Steuerung und/oder Regelung des Manipulators zuständig sein.

Zwischen dem Robotersystem und dem externen Steuerungssystem wird eine Verbindung zum Datenaustausch aufgebaut. Beispielsweise kann die Verbindung zum Datenaustausch zwischen der Robotersteuerung des Robotersystems und dem externen Steuerungssystem aufgebaut werden. Die Verbindung kann beispielsweise über ein Datentransfermodul über Netzwerktechnik, z.B. mittels TCP/IP ("Transmission Control Protocol / Internet Protocol") oder mittels NFC ("Near Field Communication", Nahfeldkommunikation) erfolgen. Weiterhin ist ein Abruf auf ein weiteres System (z.B. Datenbank, Internet/Intranet) möglich. Anschließend werden Beschreibungsdaten vom Robotersystem an das externe Steuerungssystem übertragen. Die Beschreibungsdaten können z.B. von der Robotersteuerung des Robotersystems an das externe Steuerungssystem übertragen werden. Auf Basis der empfangenen Beschreibungsdaten wird ein mathematisches Robotermodell durch das externe Steuerungssystem erstellt. Bei dem Robotermodell kann es sich um ein statisches und/oder dynamisches Robotermodell handeln, mittels dessen die Bewegung des Manipulators richtig berechnet werden kann und mithilfe dessen der Manipulator korrekt angesteuert werden kann. Das statische Robotermodell kann insbesondere Informationen über die Kinematik des Manipulators, beispielsweise Achslängen oder DH-Parameter, umfassen, um Vorwärtskinematik und/oder eine Rückwärtskinematik berechnen zu können. Das dynamische Robotermodell umfasst vorzugsweise Informationen über dynamische Parameter, beispielsweise Achsmassen, Schwerpunkte und/oder Trägheit des Manipulators. Das Erstellen des mathematischen Robotermodells durch das externe Steuerungssystem erfolgt automatisiert.

Weiterhin wird eine Kommunikation zwischen dem externen Steuerungssystem und der Robotersteuerung des Robotersystems auf Basis der empfangenen Beschreibungsdaten eingerichtet. Das Einrichten der Kommunikation erfolgt automatisiert. Erfindungsgemäß übernimmt das externe Steuerungssystem automatisiert die Steuer- und/oder Regelungshoheit über das Robotersystem

Mittels des hier beschriebenen Verfahrens erfolgt erfindungsgemäß eine automatisierte Konfiguration und Ansteuerung des Robotersystems Weiterhin kann dadurch eine aufwändige manuelle Implementierung des Robotermodells für den jeweiligen Manipulator entfallen. Somit können Integrationszeiten stark verkürzt werden, wodurch ein zügiger Einsatz des für eine bestimmte Anwendung am besten geeigneten Manipulators ermöglicht wird.

Gemäß einer weiteren Ausführungsform weist das externe Steuerungssystem eine weitere Robotersteuerung auf oder besteht aus einer weiteren Robotersteuerung. Das externe Steuerungssystem kann z.B. eine Industriesteuerung sein. Weiterhin kann das externe Steuerungssystem einen Computer aufweisen oder aus einem Computer bestehen, wobei es sich bei dem Computer insbesondere um einen Personal Computer oder um einen Tablet Computer handeln kann. Darüber hinaus kann das externe Steuerungssystem auch ein verteiltes Computersystem, wie z.B. eine sogenannte Cloud, umfassen.

Gemäß einer weiteren Ausführungsform enthalten die Beschreibungsdaten Basisdaten des Robotersystems. Beispielsweise können die Beschreibungsdaten Daten über den Hersteller des Robotersystems und/oder über eine Visualisierung enthalten. Die Basisdaten können z.B. Informationen über eine Integrationstiefe des Robotersystems enthalten.

Erfindungsgemäß enthalten die vom Robotersystem an das externe Steuerungssystem übertragenen Beschreibungsdaten Daten über den Manipulator des Robotersystems. Die Daten über den Manipulator enthalten erfindungsgemäß eines oder mehrere der folgenden Merkmale: Kinematik, Achsen, DH-Parameter, Massen, Massenträgheit, Schwerpunkte, Ruck, Drehmomente, Motordaten, statische und/oder dynamische Reibung, Getriebeübersetzung.

Erfindungsgemäß enthalten die übertragenen Beschreibungsdaten Informationen zur Einrichtung der Kommunikation zwischen dem externen Steuerungssystem und der Robotersteuerung. Die Beschreibungsdaten können z.B. Informationen über ein oder mehrere der folgenden Merkmale umfassen: Schnittstellenbelegung zu einer Bewegungsbefehlsvorgabe, Signalablauf, Schnittstellenbelegung zu einer Positionsvorgabe, Zykluszeit, Jitter, Bewegungslatenz, Aufbau des Nachrichtenprotokolls.

Gemäß einer weiteren Ausführungsform sind die Beschreibungsdaten semantisch beschrieben, sodass eine automatisierte Verarbeitung ermöglicht wird. Die Beschreibungsdaten werden z.B. durch eine formale, domänenspezifische Taxonomie und Ontologie definiert, um die Verarbeitungsdaten maschineninterpretier- und bearbeitbar zu halten. Dieses formale Datenmodell beinhaltet vorzugsweise die notwendigen Informationen für die Integration der Steuerungsschnittstelle und den Aufbau des mathematischen Robotermodells.

Gemäß einer weiteren Ausführungsform sind die Beschreibungsdaten in einem mehrstufigen Modell beschrieben. Insbesondere können die Beschreibungsdaten derart in einem mehrstufigen Modell beschrieben sein, dass die Steuerung des Robotersystems zwischen zumindest zwei der Ebenen Applikation, Interpolation und/oder Antrieb differenziert werden kann. Die Applikationsebene kann beispielsweise eine Vorgabe von Bewegungsbefehlen oder Bewegungsprimitiven umfassen. Die Interpolationsebene kann z.B. eine zyklische Vorgabe von kartesischen TCP-Positionen oder Achspositionen umfassen. Die Antriebsebene kann beispielsweise die Steuerung und/oder Regelung des Antriebssystems des Robotersystems umfassen. Besonders bevorzugt sind die Beschreibungsdaten derart in einem mehrstufigen Modell beschrieben, dass die Steuerung des Robotersystems zwischen den drei Ebenen Applikation, Interpolation und Antrieb differenziert werden kann.

Beispielsweise kann das mehrstufige Modell auf einer obersten Ebene notwendige Informationen zur Ausführung von Bewegungsaktionen umfassen. Auf einer weiteren, mittleren Ebene kann das mehrstufige Modell Informationen zum Ausführen von Steuerungsfunktionen auf zyklischer Positionsebene (Soll-Vorgaben) umfassen. Auf einer oder mehreren weiteren, tiefen Ebenen kann das mehrstufige Modell Informationen zum Ausführen von Regelungsfunktionen umfassen.

Gemäß einer weiteren Ausführungsform kann das mehrstufige Modell zwei oder mehr Ebenen aus den folgenden Integrationsebenen umfassen: Basisinformationsebene (Integrationsebene 0), Applikationsebene (Integrationsebene 1), Interpolationsebene (Integrationsebene 2), Antriebsebene (Integrationsebene 3).

Die Basisinformationsebene kann insbesondere Basisdaten des Robotersystems, wie z.B. Angaben des Herstellers, Seriennummer, CAD-Daten und/oder die zur Verfügung gestellten Integrationsebenen umfassen. Weiterhin können in dieser Ebene Datenmaterial zur BUS-Konfiguration und/oder Visualisierungsdaten des Robotersystems enthalten sein.

Die Applikationsebene kann beispielsweise verwendbare Applikationsbefehle, wie z.B. PTP oder LIN-Bewegungen, notwendige Parameter und/oder die Schnittstellenbelegungen zum Aufruf der Funktionen umfassen.

Die Interpolationsebene kann sich beispielsweise in eine statische und dynamische Interpolation separieren. Auf statischer Interpolationsebene können z.B. Informationen wie Zykluszeit der Interpolation oder Schnittstellen zur Ansteuerung der einzelnen Achsen zur Konfiguration enthalten sein. Weiterhin können z. B. Kinematikdaten (DH-Parameter, Anzahl Achsen, Achslängen, Kinematiktyp) bezüglich der Mechanik des Manipulators enthalten sein. Optional können auch für eine ideal dynamische Steuerung Angaben zu Massen bzw. Massenträgheiten mitgeliefert werden. Zusätzlich oder alternativ ist es möglich für die dynamisch ideale Ansteuerung notwendige Daten als Beschleunigungs- und/oder Bahnplanungsmodul mitzuliefern. Dem Roboterhersteller steht somit frei, ob er wettbewerbskritische Informationen (Massen, Massenschwerpunkt und - Trägheit) zur Verfügung stellen möchte oder die Dynamikdaten in einer Softwarebibliothek verschlüsselt mitliefert.

Die Antriebsebene kann beispielsweise Informationen über Getriebe, Reibung und Motor im Modell enthalten.

Gemäß einer besonders bevorzugten Ausführungsform sind die Beschreibungsdaten in einem mehrstufigen Modell beschrieben, wobei das mehrstufige Modell die vier Ebenen Basisinformationsebene, Applikationsebene, Interpolationsebene und Antriebsebene umfasst.

Gemäß einer weiteren Ausführungsform erfolgt die Übertragung der Beschreibungsdaten über einen Freigabemechanismus. Beispielsweise kann die Übertragung der Beschreibungsdaten über einen Lizenzschlüssel erfolgen. Dadurch kann vorteilhafterweise einem Missbrauch vorgebeugt werden.

Gemäß einer weiteren Ausführungsform enthalten die übertragenen Beschreibungsdaten ein Bahnplanungsmodul und/oder maximale Beschleunigungswerte des Manipulators. Beispielsweise können die Beschreibungsdaten auf der Interpolationsebene lediglich Daten bezüglich des Bahnplanungsmoduls und/oder der maximalen Beschleunigungswerte, jedoch keinerlei Detailinformationen zu Massen, Massenschwerpunkten und/oder Massenträgheiten des Manipulators enthalten.

Durch das hier beschriebene Verfahren können vorteilhafterweise Robotersysteme von unterschiedlichen Herstellern und Manipulatoren unterschiedlicher Geometrie aufwandsarm in übergeordnete bzw. externe Steuerungssysteme eingebunden werden. Dies stellt einen Befähiger dar, um unterschiedliche Robotersysteme in einer Produktionslandschaft hochflexibel integrieren zu können.

Des Weiteren wird ein weiteres Verfahren zur automatischen Konfiguration eines externen Steuerungssystems zur Regelung und/oder Steuerung eines Robotersystems angegeben. Bei dem weiteren Verfahren werden ein externes Steuerungssystem und ein Robotersystem bereitgestellt. Das Robotersystem weist einen Manipulator mit einem Antriebssystem auf. Der Manipulator weist vorzugsweise zumindest einen Roboterarm auf. Beispielsweise kann es sich um einen mehrachsigen Roboterarm handeln. Das Antriebssystem kann z.B. einen Antriebsmotor oder eine Mehrzahl von Antriebsmotoren, insbesondere zum Bewegen des Manipulators, umfassen. Die Antriebsmotoren können beispielsweise als Servomotoren ausgebildet sein. Optional kann das Antriebssystem einen oder mehrere Frequenzumrichter zur Ansteuerung des Antriebsmotors bzw. der Antriebsmotoren aufweisen.

Zwischen dem Robotersystem und dem externen Steuerungssystem wird eine Verbindung zum Datenaustausch aufgebaut. Beispielsweise kann die Verbindung zum Datenaustausch zwischen dem Robotersystem und dem externen Steuerungssystem über ein Steuermodul, welches am Manipulator angeordnet ist, erfolgen. Alternativ oder zusätzlich kann die Verbindung zum Datenaustausch zwischen einer Robotersteuerung des Robotersystems und dem externen Steuerungssystem aufgebaut werden. Die Verbindung kann beispielsweise über ein Datentransfermodul über Netzwerktechnik, z.B. mittels TCP/IP ("Transmission Control Protocol / Internet Protocol") oder mittels NFC ("Near Field Communication", Nahfeldkommunikation) erfolgen. Weiterhin ist ein Abruf auf ein weiteres System (z.B. Datenbank, Internet/Intranet) möglich. Anschließend werden Beschreibungsdaten, welche Informationen über Achsparameter des Manipulators umfassen, vom Robotersystem an das externe Steuerungssystem übertragen. Die Beschreibungsdaten können z.B. vom Steuermodul an das externe Steuerungssystem übertragen werden. Alternativ oder zusätzlich können die Beschreibungsdaten von der Robotersteuerung des Robotersystems an das externe Steuerungssystem übertragen werden.

Auf Basis der empfangenen Beschreibungsdaten wird ein mathematisches Robotermodell durch das externe Steuerungssystem erstellt. Bei dem Robotermodell kann es sich um ein statisches und/oder dynamisches Robotermodell handeln, mittels dessen die Bewegung des Manipulators richtig berechnet werden kann und mithilfe dessen der Manipulator korrekt angesteuert werden kann. Das statische Robotermodell kann insbesondere Informationen über die Kinematik des Manipulators, beispielsweise Achslängen oder DH-Parameter, umfassen, um Vorwärtskinematik und/oder eine Rückwärtskinematik berechnen zu können. Das dynamische Robotermodell umfasst vorzugsweise Informationen über dynamische Parameter, beispielsweise Achsmassen, Schwerpunkte und/oder Trägheit des Manipulators. Das Erstellen des mathematischen Robotermodells durch das externe Steuerungssystem kann beispielsweise teilautomatisiert oder voll automatisiert erfolgen.

Weiterhin wird eine kommunikative und/oder elektrische Verbindung zwischen dem externen Steuerungssystem und Antriebssystem des Manipulators auf Basis der empfangenen Beschreibungsdaten eingerichtet. Das Einrichten der Kommunikation kann ebenfalls teilautomatisiert oder voll automatisiert erfolgen. Vorzugsweise kann das externe Steuerungssystem automatisiert die Steuer- und/oder Regelungshoheit über das Robotersystem bzw. über den Manipulator des Robotersystems übernehmen.

Das hier beschriebene weitere Verfahren umfasst somit insbesondere die folgenden Schritte:
- Bereitstellen eines externen Steuerungssystems sowie eines Robotersystems, welches zumindest einen Manipulator und eine Robotersteuerung aufweist,
- Aufbauen einer Verbindung zum Datenaustausch zwischen dem Robotersystem und dem externen Steuerungssystem,
- Übertragen von Beschreibungsdaten vom Robotersystem an das externe Steuerungssystem,
- Erstellen eines mathematischen Robotermodells durch das externe Steuerungssystem auf Basis der empfangenen Beschreibungsdaten, und
- Einrichten einer Kommunikation zwischen dem externen Steuerungssystem und der Robotersteuerung auf Basis der empfangenen Beschreibungsdaten.

Mittels des hier beschriebenen weiteren Verfahrens kann vorteilhafterweise eine Konfiguration und Ansteuerung des Robotersystems automatisiert erfolgen. Weiterhin kann dadurch eine aufwändige manuelle Implementierung des Robotermodells für den jeweiligen Manipulator entfallen. Somit können Integrationszeiten stark verkürzt werden, wodurch ein zügiger Einsatz des für eine bestimmte Anwendung am besten geeigneten Manipulators ermöglicht wird.

Gemäß einer weiteren Ausführungsform enthalten die Informationen über die Achsparameter des Manipulators Daten zu Längen, Abständen und/oder Drehwinkelrichtungen des Manipulators. Zusätzlich können die Informationen über die Achsparameter des Manipulators Daten zu einem oder mehreren der folgenden Merkmale umfassen: DH-Parameter, Massen, Massenträgheit, Schwerpunkte, Ruck, Drehmomente, Motordaten, statische und/oder dynamische Reibung, Getriebeübersetzung.

Gemäß einer weiteren Ausführungsform enthalten die Beschreibungsdaten Basisdaten des Robotersystems. Beispielsweise können die Beschreibungsdaten Daten über den Hersteller des Robotersystems und/oder über eine Visualisierung enthalten. Die Basisdaten können z.B. Informationen über eine Integrationstiefe des Robotersystems enthalten.

Gemäß einer weiteren Ausführungsform enthalten die Beschreibungsdaten Informationen zur Einrichtung der kommunikativen und/oder elektrischen Verbindung zwischen dem externen Steuerungssystem und dem Antriebssystem des Manipulators. Beispielsweise können die Beschreibungsdaten Informationen über eine oder mehrere der folgenden Merkmale umfassen: Bussystem, Encoder und/oder Resolver.

Gemäß einer weiteren Ausführungsform weist das externe Steuerungssystem einen oder mehrere Frequenzumrichter auf. Der bzw. die Frequenzumrichter können z.B. derart ausgebildet sein, dass sie aus einer Wechselspannung eine in der Frequenz und Amplitude veränderbare Wechselspannung für die direkte Versorgung des Antriebssystems des Manipulators generieren. Weiterhin können die Frequenzumrichter Sensoreingänge aufweisen, um Zustandsparameter des Antriebssystems des Manipulators zu erfassen. Gemäß dieser Ausführungsform, bei der das externe Steuerungssystem zumindest Frequenzumrichter aufweist, kann das Antriebssystem derart ausgebildet sein, dass es keinen Frequenzumrichter umfasst.

Gemäß einer weiteren Ausführungsform weist das Robotersystem eine Robotersteuerung mit Frequenzumrichtern auf. Die Frequenzumrichter können z.B. Teil des Antriebssystems des Manipulators sein. Die Beschreibungsdaten können beispielsweise Informationen über die Robotersteuerung umfassen. Insbesondere können die Beschreibungsdaten Informationen zu einem oder mehreren der folgenden Merkmale umfassen: Schnittstellenbelegung zu einer Sollwertvorgabe, Zykluszeit, Jitter, Bewegungslatenz, Aufbau des Nachrichtenprotokolls

Gemäß einer weiteren Ausführungsform weist das externe Steuerungssystem eine weitere Robotersteuerung auf oder besteht aus einer weiteren Robotersteuerung. Das externe Steuerungssystem kann z.B. eine Industriesteuerung sein. Weiterhin kann das externe Steuerungssystem einen Computer aufweisen oder aus einem Computer bestehen, wobei es sich bei dem Computer insbesondere um einen Personal Computer oder um einen Tablet Computer handeln kann. Darüber hinaus kann das externe Steuerungssystem auch ein verteiltes Computersystem, wie z.B. eine sogenannte Cloud, umfassen.

Gemäß einer weiteren Ausführungsform sind die Beschreibungsdaten semantisch beschrieben, sodass eine automatisierte Verarbeitung ermöglicht wird. Die Beschreibungsdaten werden z.B. durch eine formale, domänenspezifische Taxonomie und Ontologie definiert, um die Verarbeitungsdaten Maschineninterpretier- und bearbeitbar zu halten. Dieses formale Datenmodell beinhaltet vorzugsweise die notwendigen Informationen für die Integration der Steuerungsschnittstelle und den Aufbau des mathematischen Robotermodells.

Gemäß einer weiteren Ausführungsform sind die Beschreibungsdaten in einem mehrstufigen Modell beschrieben. Insbesondere können die Beschreibungsdaten derart in einem mehrstufigen Modell beschrieben sein, dass die Steuerung bzw. Regelung des Robotersystems mindestens zwischen einer Ebene einer logischen Antriebssteuerung und einer Ebene einer physischen Antriebssteuerung differenziert werden kann.

Beispielsweise kann das Modell in seinen Beschreibungsdaten daher unterscheiden, welche Informationen für eine bestimmte Integrationstiefe des Robotersystems erforderlich sind. Informationen zum statischen und dynamischen Robotermodell können so separiert bereitgestellt werden. Ebenso können Informationen zur Bus-Integration bei der logischen Ansteuerung der Frequenzumrichter im Robotersystem von den Informationen zur elektrischen Ansteuerung der Motoren im Robotersystem getrennt voneinander beschrieben werden. Die Angabe der Informationen für eine ideale, dynamische Steuerung können als klassische Mechanikdaten wie z.B. Massen, Massenschwerpunkte, Massenträgheiten und/oder Reibungen mitgeliefert werden. Zusätzlich oder alternativ ist es möglich für die dynamisch ideale Ansteuerung notwendige Daten als Beschleunigungs- und/oder Bahnplanungsmodul mitzuliefern. Dem Roboterhersteller steht somit frei, ob er wettbewerbskritische Informationen (Massen, Massenschwerpunkt und -Trägheit) zur Verfügung stellen möchte oder die Dynamikdaten in einer Softwarebibliothek verschlüsselt mitliefert.

Gemäß einer weiteren Ausführungsform erfolgt die Übertragung der Beschreibungsdaten über einen Freigabemechanismus. Beispielsweise kann die Übertragung der Beschreibungsdaten über einen Lizenzschlüssel erfolgen. Dadurch kann vorteilhafterweise einem Missbrauch vorgebeugt werden.

Gemäß einer weiteren Ausführungsform enthalten die übertragenen Beschreibungsdaten ein Bahnplanungsmodul und/oder maximale Beschleunigungswerte des Manipulators. Beispielsweise können die Beschreibungsdaten auf der Interpolationsebene lediglich Daten bezüglich des Bahnplanungsmoduls und/oder der maximalen Beschleunigungswerte, jedoch keinerlei Detailinformationen zu Massen, Massenschwerpunkten und/oder Massenträgheiten des Manipulators enthalten.

Weitere Vorteile und vorteilhafte Ausführungsformen der hier beschriebenen Verfahren ergeben sich aus den im Folgenden in Verbindung mit den Figuren 1 bis 7 beschriebenen Ausführungsformen. Es zeigen:
- Figuren 1 und 2: schematische Darstellungen eines Verfahrens zur automatischen Konfiguration eines externen Steuerungssystems gemäß einem Ausführungsbeispiel,
- Figur 3: eine schematische Darstellung eines hier beschriebenen Verfahrens gemäß einem weiteren Ausführungsbeispiel, und
- Figuren 4 bis 7: schematische Darstellungen eines weiteren Verfahrens zur automatischen Konfiguration eines externen Steuerungssystems gemäß weiteren Ausführungsbeispielen.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben groß dimensioniert dargestellt sein.

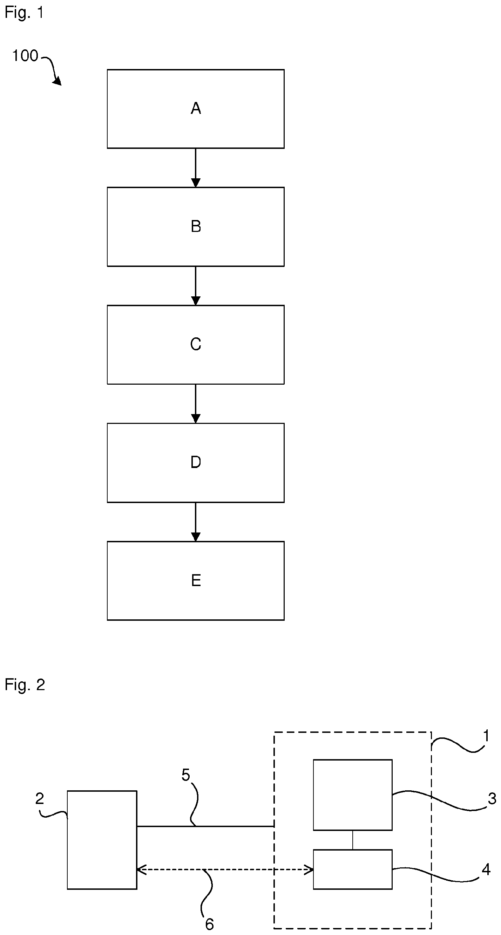

Die Figuren 1 und 2 zeigen zwei verschiedene schematische Darstellungen eines Verfahrens 100 zur automatischen Konfiguration eines externen Steuerungssystems 2 zur Steuerung und/oder Regelung eines Robotersystems 1 gemäß einem ersten Ausführungsbeispiel. Bei dem Verfahren 100 werden zunächst in einem ersten Verfahrensschritt A ein externes Steuerungssystem 2 sowie ein Robotersystem 1, das einen Manipulator 3 und eine Robotersteuerung 4 umfasst, bereitgestellt. Das externe Steuerungssystem 2 kann beispielsweise eine weitere Robotersteuerung aufweisen oder aus einer weiteren Robotersteuerung bestehen. Weiterhin kann das externe Steuerungssystem 2 einen Computer aufweisen und/oder ein verteiltes Computersystem, insbesondere eine sogenannte Cloud, umfassen.

In einem nachfolgenden Verfahrensschritt B wird eine Verbindung 5 zum Datenaustausch zwischen dem Robotersystem 1 und dem externen Steuerungssystem 2 aufgebaut.

Nach dem Aufbauen der Verbindung 5 werden im Verfahrensschritt C Beschreibungsdaten vom Robotersystem 1 an das externe Steuerungssystem 2 übertragen. Auf Basis der übertragenen Beschreibungsdaten ist es dem externen Steuerungssystem 2 möglich, die Schnittstellenkonfiguration automatisch durchzuführen und ein statisches und/oder dynamisches Robotermodell automatisiert aufzubauen, um den Manipulator 3 korrekt anzusteuern.

Die Beschreibungsdaten enthalten vorzugsweise Basisdaten des Robotersystems 1. Insbesondere können die Beschreibungsdaten Informationen über den Hersteller des Robotersystems 1 und/oder über eine Visualisierung enthalten. Die Basisdaten des Robotersystems 1 können z.B. Informationen über eine Integrationstiefe des Robotersystems 1 enthalten. Zusätzlich oder alternativ können die vom Robotersystem 1 an das externe Steuerungssystem 2 übertragenen Beschreibungsdaten Daten über den Manipulator 3 des Robotersystems 1 enthalten. Beispielsweise können die Daten über den Manipulator 3 Informationen über die Kinematik, die Achsen, die DH Parameter, die Massen, Massenträgheit, die Schwerpunkte, den Rock, die Drehmomente, die Motordaten, die statische bzw. dynamische Reibung und/oder über die Getriebeübersetzung des Manipulators enthalten. Weiterhin können die Beschreibungsdaten Informationen zur Einrichtung der Kommunikation 6 zwischen dem externen Steuerungssystem 2 und der Robotersteuerung 4 enthalten. Beispielsweise können die Beschreibungsdaten Informationen über die Schnittstellenbelegung zu einer Bewegungsbefehlsvorgabe, den Signalablauf, die Schnittstellenbelegung zu einer Positionsvorgabe, die Zykluszeit, den Jitter, die Bewegungslatenz und/oder den Aufbau des Nachrichtenprotokolls enthalten.

Im Verfahrensschritt D wird ein mathematisches Robotermodell durch das externe Steuerungssystem 2 auf Basis der empfangenen Beschreibungsdaten erstellt. Das Erstellen des mathematischen Robotermodells durch das externe Steuerungssystem 2 erfolgt vorzugsweise teilautomatisiert oder vollautomatisiert.

Im Verfahrensschritt E wird auf Basis der empfangenen Beschreibungsdaten eine Kommunikation 6 zwischen dem externen Steuerungssystem 2 und der Robotersteuerung 4 eingerichtet. Das Einrichten der Kommunikation 6 erfolgt vorzugsweise ebenfalls teilautomatisiert oder vollautomatisiert.

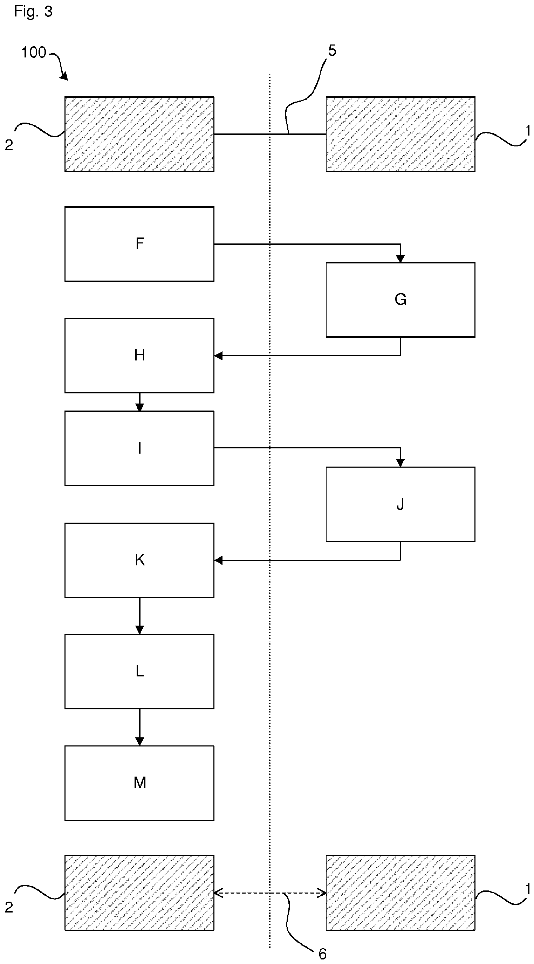

Die Figur 3 zeigt anhand eines Ablaufdiagramms eine schematische Darstellung eines Verfahrens zur automatischen Konfiguration eines externen Steuerungssystems 2 zur Steuerung und/oder Regelung eines Robotersystems 1 gemäß einem weiteren Ausführungsbeispiel. Dabei wird ein bereitgestelltes externes Steuerungssystem 2 zum Datenaustausch durch eine Datenverbindung 5 mit einem Robotersystem 1 verbunden. Weiterhin werden durch das externe Steuerungssystem 2 in einem Verfahrensschritt F Basisinformationen vom Robotersystem 1 abgerufen. Die Kommunikation zwischen dem externen Steuerungssystem 2 und dem Robotersystem 1 kann beispielsweise mittels TCP/IP ("Transmission Control Protocol / Internet Protocol") oder mittels NFC ("Near Field Communication", Nahfeldkommunikation) erfolgen. Im Verfahrensschritt G werden vom Robotersystem 1 die Basisinformationen zur Verfügung gestellt. Die Basisinformationen können beispielsweise Herstellerangaben, wie z.B. einen Herstellernamen, mögliche auszuwählende Integrationsebenen, Informationen über eine Buskonfiguration und/oder Visualisierungsdaten enthalten. Im Verfahrensschritt H wird mittels des externen Steuerungssystems 2 eine geeignete Integrationsebene ausgewählt und im Verfahrensschritt I werden durch das externe Steuerungssystem 2 die zur Konfiguration notwendigen Informationen abgerufen.

Die auszuwählenden Integrationsebenen können beispielsweise die Ebenen "Applikation", "Interpolation" und/oder "Antrieb" umfassen. Die Ebene "Applikation" kann z.B. Applikationsbefehle (PTP, LIN), Parameter und/oder Schnittstellenbelegungen (I/O) umfassen. Die Ebene "Interpolation" kann beispielsweise Daten über den Manipulator 3 umfassen, wie z.B. Daten zu Kinematik, Achsen, DH-Parameter, Massen, Massenträgheit, Schwerpunkte, Ruck und/oder Drehmomente. Weiterhin kann die Ebene "Interpolation" Steuerungsinformationen enthalten, wie z.B. bzgl. Schnittstellenbelegung, Signalablauf, Zykluszeit, Jitter, Bewegungslatenz, Aufbau des Nachrichtenprotokolls, Bahnplanungsmodul und/oder maximale Beschleunigungen. Die Ebene "Antrieb" kann z.B. Daten über den Manipulator 3 umfassen, wie z.B. Motordaten, Daten zur statischen bzw. dynamischen Reibung und/oder Getriebeübersetzung des Manipulators. Weiterhin kann die Ebene "Antrieb" Steuerungsinformationen bezüglich einer Schnittstellenbelegung enthalten.

Im Verfahrensschritt J werden die abgerufenen Daten, welche insbesondere die Schnittstellen- und Manipulatordaten umfassen, vom Robotersystem 1 zur Verfügung gestellt. Anschließend werden im Verfahrensschritt K die zur Verfügung gestellten Daten vom externen Steuerungssystem 2 verarbeitet und überprüft. Im nachfolgenden Verfahrensschritt L erfolgt die automatische Konfiguration der Schnittstellenanbindung. Im Verfahrensschritt wird das mathematische Robotermodell durch das externe Steuerungssystem 2 auf Basis der vom Robotersystem 1 zur Verfügung gestellten Daten erstellt. Weiterhin wird auf Basis der Daten eine Kommunikation 6 zwischen dem externen Steuerungssystem 2 und der Robotersteuerung 4 eingerichtet. Das Einrichten der Kommunikation 6 kann beispielsweise teil- oder vollautomatisiert erfolgen.

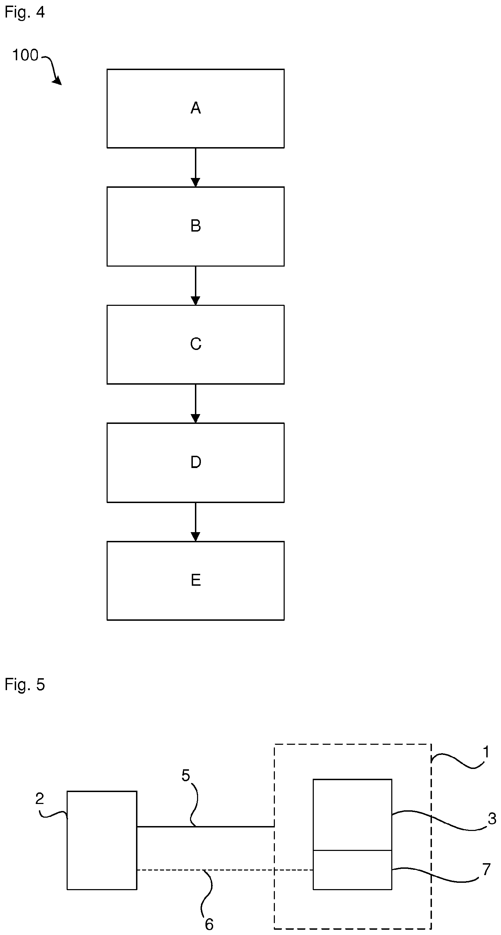

Die Figuren 4 und 5 zeigen zwei verschiedene schematische Darstellungen eines weiteren Verfahrens 100 zur automatischen Konfiguration eines externen Steuerungssystems 2 zur Steuerung und/oder Regelung eines Robotersystems 1 gemäß einem ersten Ausführungsbeispiel. Bei dem Verfahren 100 werden zunächst in einem ersten Verfahrensschritt A ein externes Steuerungssystem 2 sowie ein Robotersystem 1, das einen Manipulator 3 mit einem Antriebssystem 7 umfasst, bereitgestellt. Das externe Steuerungssystem 2 kann beispielsweise eine Robotersteuerung aufweisen oder aus einer weiteren Robotersteuerung bestehen. Weiterhin kann das externe Steuerungssystem 2 einen Computer aufweisen und/oder ein verteiltes Computersystem, insbesondere eine sogenannte Cloud, umfassen.

In einem nachfolgenden Verfahrensschritt B wird eine Verbindung 5 zum Datenaustausch zwischen dem Robotersystem 1 und dem externen Steuerungssystem 2 aufgebaut. Das Robotersystem 1 kann z.B. ein Steuermodul (nicht gezeigt) aufweisen, das z.B. Teil des Manipulators sein kann oder am Manipulator befestigt sein kann, wobei der Datenaustausch über das Steuermodul erfolgt.

Nach dem Aufbauen der Verbindung 5 werden im Verfahrensschritt C Beschreibungsdaten, welche Informationen über Achsparameter des Manipulators 3 umfassen, vom Robotersystem 1 an das externe Steuerungssystem 2 übertragen. Auf Basis der übertragenen Beschreibungsdaten ist es dem externen Steuerungssystem 2 möglich, die Schnittstellenkonfiguration automatisch durchzuführen und ein statisches und/oder dynamisches Robotermodell automatisiert aufzubauen, um den Manipulator 3 korrekt anzusteuern.

Die Beschreibungsdaten enthalten vorzugsweise Daten zu Längen, Abständen und/oder zur Drehwinkelrichtung des Manipulators 3. Weiterhin können die Beschreibungsdaten Daten zu DH-Parameter, Massen, Massenträgheit, Schwerpunkte, Ruck, Drehmomente, Motordaten, statischer bzw. dynamischer Reibung und/oder zur Getriebeübersetzung des Manipulators umfassen.

Darüber hinaus ist es möglich, dass die Beschreibungsdaten Basisdaten des Robotersystems 1 enthalten. Insbesondere können die Beschreibungsdaten Informationen über den Hersteller des Robotersystems 1 und/oder über eine Visualisierung enthalten. Die Basisdaten des Robotersystems 1 können z.B. auch Informationen über die Integrationstiefe des Robotersystems 1 enthalten. Weiterhin können die Beschreibungsdaten Informationen zur Einrichtung einer kommunikativen und/oder elektrischen Verbindung 6 zwischen dem externen Steuerungssystem 2 und dem Antriebssystem 7 des Manipulators 3 enthalten. Beispielsweise können die Beschreibungsdaten Informationen über das Bussystem, den Encoder und/oder den Resolver umfassen.

Im Verfahrensschritt D wird ein mathematisches Robotermodell durch das externe Steuerungssystem 2 auf Basis der empfangenen Beschreibungsdaten erstellt. Das Erstellen des mathematischen Robotermodells durch das externe Steuerungssystem 2 erfolgt vorzugsweise teilautomatisiert oder vollautomatisiert.

Im Verfahrensschritt E wird auf Basis der empfangenen Beschreibungsdaten eine kommunikative und/oder elektrische Verbindung 6 zwischen dem externen Steuerungssystem 2 und dem Antriebssystem 7 des Manipulators 3 eingerichtet. Das Einrichten der Kommunikation 6 erfolgt vorzugsweise ebenfalls teilautomatisiert oder vollautomatisiert.

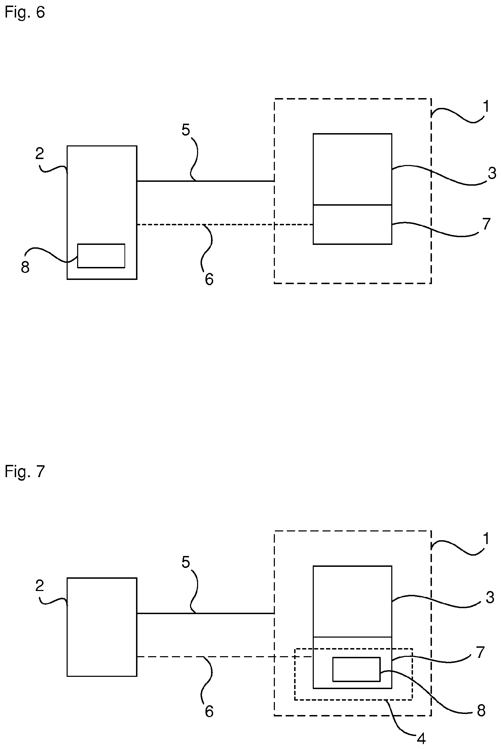

Die Figuren 6 und 7 zeigen zwei weitere Ausführungsbeispiele eines hier beschriebenen weiteren Verfahrens. Im Unterschied zu dem in Verbindung mit der Figur 5 gezeigten Ausführungsbeispiel weist das externe Steuerungssystem 2 beim Ausführungsbeispiel gemäß Figur 6 einen oder mehrere Frequenzumrichter 8 auf, mittels derer ein Motor oder mehrere dem Motoren des Antriebssystems 7 des Manipulators 3 angesteuert werden können. Vorzugsweise weist das Robotersystem 1 keine eigenen Frequenzumrichter auf.

Beim Ausführungsbeispiel gemäß der Figur 7 weist das Antriebssystem 7 des Manipulators 3 einen oder mehrere Frequenzumrichter 8 zur Ansteuerung eines oder mehrerer Motoren des Antriebssystems 7 auf. Der Frequenzumrichter 8 bzw. die Frequenzumrichter 8 sind Teil einer Robotersteuerung 4 des Robotersystems 1. Bei diesem Ausführungsbeispiel ist es nicht notwendig, dass das externe Steuerungssystem 2 Frequenzumrichter zur Ansteuerung von Motoren des Manipulators 3 umfasst.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Robotersystem
- 2: externes Steuerungssystem
- 3: Manipulator
- 4: Robotersteuerung
- 5: Verbindung
- 6: Kommunikation
- 7: Antriebssystem
- 8: Frequenzumrichter
- 100: Verfahren
- A - M: Verfahrensschritte

## Patentansprüche

1. Verfahren zur automatischen Konfiguration eines externen Steuerungssystems (2) zur Steuerung und/oder Regelung eines Robotersystems (1), aufweisend folgende Schritte:
- Bereitstellen eines externen Steuerungssystems (2) sowie eines Robotersystems (1), welches zumindest einen Manipulator (3) und eine Robotersteuerung (4) aufweist,
- Aufbauen einer Verbindung (5) zum Datenaustausch zwischen dem Robotersystem (1) und dem externen Steuerungssystem (2),
- Übertragen von Beschreibungsdaten vom Robotersystem (1) an das externe Steuerungssystem (2), wobei die Beschreibungsdaten Informationen zur Einrichtung einer Kommunikation (6) zwischen dem externen Steuerungssystem (2) und der Robotersteuerung (4) und Daten über den Manipulator (3) des Robotersystems (1) enthalten, wobei die Daten über den Manipulator (3) Informationen über ein oder mehrere der folgenden Merkmale umfassen: Kinematik, Achsen, DH-Parameter, Massen, Massenträgheit, Schwerpunkte, Ruck, Drehmomente, Motordaten, statische und/oder dynamische Reibung, Getriebeübersetzung,
- automatisiertes Erstellen eines mathematischen Robotermodells, welches der Berechnung der Bewegung des Manipulators (3) und der korrekten Ansteuerung des Manipulators (3) dient, durch das externe Steuerungssystem (2) auf Basis der empfangenen Beschreibungsdaten, und
- automatisiertes Einrichten der Kommunikation (6) zwischen dem externen Steuerungssystem (2) und der Robotersteuerung (4) auf Basis der empfangenen Beschreibungsdaten,
- automatisierte Übernahme der Steuer- und/oder Regelungshoheit über das Robotersystem (1) durch das externe Steuerungssystem (2).

2. Verfahren nach Anspruch 1, wobei die Beschreibungsdaten Basisdaten des Robotersystems (1) enthalten.

3. Verfahren nach Anspruch 2, wobei die Basisdaten Informationen über eine Integrationstiefe des Robotersystems (1) enthalten.

4. Verfahren nach einem der vorhergehenden Ansprüche, wobei die Beschreibungsdaten Informationen über ein oder mehrere der folgenden Merkmale umfassen: Schnittstellenbelegung zu einer Bewegungsbefehlsvorgabe, Signalablauf, Schnittstellenbelegung zu einer Positionsvorgabe, Zykluszeit, Jitter, Bewegungslatenz, Aufbau des Nachrichtenprotokolls.

5. Verfahren nach einem der vorhergehenden Ansprüche, wobei das externe Steuerungssystem (2) eine weitere Robotersteuerung aufweist oder aus einer weiteren Robotersteuerung besteht.

6. Verfahren nach einem der vorhergehenden Ansprüche, wobei das externe Steuerungssystem (2) einen Computer, insbesondere einen Personal Computer, aufweist oder aus einem Computer besteht.

7. Verfahren nach einem der vorhergehenden Ansprüche, wobei das externe Steuerungssystem (2) ein verteiltes Computersystem umfasst.

8. Verfahren nach einem der vorhergehenden Ansprüche, wobei die Beschreibungsdaten in einem mehrstufigen Modell beschrieben sind, um die Steuerung des Robotersystems (1) zwischen zumindest zwei der folgenden Ebenen zu differenzieren: Applikationsebene, Interpolationsebene, Antriebsebene.

9. Verfahren nach einem der vorhergehenden Ansprüche, wobei die Übertragung der Beschreibungsdaten über einen Freigabemechanismus, insbesondere einen Lizenzschlüssel, erfolgen muss.

10. Verfahren nach einem der vorhergehenden Ansprüche, wobei die Beschreibungsdaten ein Bahnplanungsmodul und/oder maximale Beschleunigungswerte enthalten.

## Claims

1. Method for automatically configuring an external control system (2) for the open-loop and/or closed-loop control of a robot system (1), having the following steps of:
- providing an external control system (2) and a robot system (1) which has at least one manipulator (3) and a robot controller (4),
- setting up a connection (5) for interchanging data between the robot system (1) and the external control system (2),
- transmitting description data from the robot system (1) to the external control system (2), wherein the description data contain information for setting up communication (6) between the external control system (2) and the robot controller (4) and data relating to the manipulator (3) of the robot system (1), wherein the data relating to the manipulator (3) comprise information relating to one or more of the following features: kinematics, axes, DH parameters, masses, mass inertia, centres of gravity, jerking, torques, motor data, static and/or dynamic fiction, gear ratio,
- automatically creating a mathematical robot model, which is used to calculate the movement of the manipulator (3) and to correctly actuate the manipulator (3), by means of the external control system (2) on the basis of the received description data, and
- automatically setting up the communication (6) between the external control system (2) and the robot controller (4) on the basis of the received description data,
- the external control system (2) automatically assuming the open-loop and/or closed-loop sovereignty over the robot system (1).

2. Method according to Claim 1, wherein the description data contain basic data relating to the robot system (1).

3. Method according to Claim 2, wherein the basic data contain information relating to a depth of integration of the robot system (1).

4. Method according to one of the preceding claims, wherein the description data comprise information relating to one or more of the following features: interface assignment to a movement command specification, signal sequence, interface assignment to a position specification, cycle time, jitter, movement latency, setup of the message protocol.

5. Method according to one of the preceding claims, wherein the external control system (2) has a further robot controller or consists of a further robot controller.

6. Method according to one of the preceding claims, wherein the external control system (2) has a computer, in particular a personal computer, or consists of a computer.

7. Method according to one of the preceding claims, wherein the external control system (2) comprises a distributed computer system.

8. Method according to one of the preceding claims, wherein the description data are described in a multistage model in order to differentiate the control of the robot system (1) between at least two of the following levels: application level, interpolation level, drive level.

9. Method according to one of the preceding claims, wherein the description data have to be transmitted via a release mechanism, in particular a licence key.

10. Method according to one of the preceding claims, wherein the description data contain a path planning module and/or maximum acceleration values.

## Revendications

1. Procédé de configuration automatique d'un système de commande externe (2) destiné à commander et/ou réguler un système robot (1), le procédé comprenant les étapes suivantes :
- fournir un système de commande externe (2) et un système robot (1) qui comporte au moins un manipulateur (3) et une commande de robot (4),
- établir une liaison (5) destinée à l'échange de données entre le système robot (1) et le système de commande externe (2),
- transférer des données de description du système robot (1) vers le système de commande externe (2), les données de description contenant des informations destinées à l'établissement d'une communication (6) entre le système de commande externe (2) et la commande de robot (4) et des données sur le manipulateur (3) du système robot (1),
les données sur le manipulateur (3) comprenant des informations sur une ou plusieurs des caractéristiques suivantes : cinématique, axes, paramètres DH, masses, inertie de masse, centres de gravité, choc, couples, données moteur, frottements statiques et/ou dynamiques, rapport de transmission,
- créer automatiquement un modèle de robot mathématique qui permet de calculer le mouvement du manipulateur (3) et de commander correctement le manipulateur (3), par le biais du système de commande externe (2) sur la base des données de description reçues, et
- établir automatiquement la communication (6) entre le système de commande externe (2) et la commande de robot (4) sur la base des données de description reçues,
- prendre en charge automatiquement la souveraineté de commande et/ou de régulation sur le système robot (1) par le biais du système de commande externe (2).

2. Procédé selon la revendication 1, les données de description contenant des données de base du système robot (1).

3. Procédé selon la revendication 2, les données de base contenant des informations sur la profondeur d'intégration du système robot (1).

4. Procédé selon l'une des revendications précédentes, les données de description comprenant des informations sur une ou plusieurs des caractéristiques suivantes : affectation d'interface à une spécification d'instruction de mouvement, séquence de signaux, affectation d'interface à une spécification de position, temps de cycle, gigue, latence de mouvement, structure du protocole de message.

5. Procédé selon l'une des revendications précédentes, le système de commande externe (2) comportant une autre commande de robot ou étant une autre commande de robot.

6. Procédé selon l'une des revendications précédentes, le système de commande externe (2) comportant un ordinateur, notamment un ordinateur personnel, ou étant un ordinateur.

7. Procédé selon l'une des revendications précédentes, le système de commande externe (2) comprenant un système informatique réparti.

8. Procédé selon l'une des revendications précédentes, les données de description étant décrites dans un modèle multi-niveaux afin de différencier la commande du système robot (1) entre au moins deux des niveaux suivants : niveau application, niveau interpolation, niveau entraînement.

9. Procédé selon l'une des revendications précédentes, les données de description devant être transmises par le biais d'un mécanisme de libération, notamment une clé de licence.

10. Procédé selon l'une des revendications précédentes, les données de description contenant un module de planification de trajectoire et/ou des valeurs d'accélération maximales.
